# EUROPEAN PATENT APPLICATION

(11) **EP 1 931 046 A2**
(43) Date of publication of application: **11.06.2008**
(21) Application number: 07122202.0
(22) Date of filing: 04.12.2007
(51) Int. Cl.: H04B 1/08

(54) **In-vehicle electronic apparatus and in-vehicle electronic system**

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(71) Applicant: FUJITSU TEN LIMITED, Kobe-shi Hyogo 652-8510 (JP)
(72) Inventor: Koutari, Hiroshi c/o FUJITSU TEN LIMITED, Hyogo 652-8510 (JP)
(74) Representative: Ward, James Norman

(57) **Abstract**

There is provided an in-vehicle electronic apparatus (100) that can detachably hold a portable electronic a-oparatus (10) having a first GPS antenna (21) which receives a GPS signal and a GPS receiver (13) connectable to the first GPS antenna (21), the in-vehicle electronic apparatus (100) comprising: a second GPS antenna (133) that is provided at a main body of the vehicle and which receives the GPS signal, and a connector (150) that is directly connected to the second GPS antenna (133) via a signal line (141). When the portable electronic apparatus (10) is attached to the in-vehicle electronic apparatus (100) via the connector (150), the GPS signal received by the second GPS antenna (133) is output to the GPS receiver (13) via the connector(150).

## Description

This invention relates to an in-vehicle electronic apparatus mounted in a vehicle, and an in-vehicle electronic system provided with: a portable electronic apparatus detachably provided to the in-vehicle electronic apparatus; and the in-vehicle electronic apparatus.

As conventional navigation apparatuses, there are widely known small-sized portable navigation apparatuses with simplified structure and portability (hereinafter, referred to as Portable Navi), also known as Personal Navigation Devices; and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, the navigation apparatuses with portability of the Portable Navi and high-accuracy guide function of the in-vehicle navigation apparatus have been studied.

Japanese Patent Application Publication No. 8-318792, Japanese Patent Application Publication No. 2002-328026, Japanese Patent Application Publication No. 2005-524570, and Japanese Patent Application Publication No. 2001-239895 disclose a configuration where a navigation portion can be detached from an in-vehicle apparatus mounted in a vehicle. By removing the navigation portion from the in-vehicle apparatus, the navigation portion can be used as a Portable Navi of a single unit.

Also, as disclosed in Japanese Patent Application Publication No. 2003-166848, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

The above-described in-vehicle apparatus detachably retaining the navigation apparatus has a housing portion for housing the navigation apparatus. Therefore, the display portion and the operating portion are disposed at a front face of the navigation apparatus, so that the display of the navigation apparatus is visible and the navigation apparatus is operable even in a state where the navigation apparatus is housed in the in-vehicle apparatus.

In order to improve the visibility of the display portion and the operability of the operating portion in the navigation apparatus, a larger display portion and a larger operating portion are demanded. Since a GPS (Global Positioning System) antenna cannot be disposed at the front face of the navigation apparatus, the GPS antenna is to be disposed at another position (especially, rear face) other than the front face.

However, if the GPS antenna is disposed at another position other than the front face and then the navigation apparatus is housed in the housing portion of the in-vehicle apparatus, the GPS antenna of the navigation apparatus is shielded by the in-vehicle apparatus and cannot receive signals from a GPS satellite sufficiently.

The present invention provides an in-vehicle electronic apparatus and an in-vehicle electronic system, by which the detection accuracy of the location (that is, the location of a vehicle in which the in-vehicle electronic apparatus housing the portable electronic apparatus therein is mounted) detected by a portable electronic apparatus can be improved.

According to an aspect of the present invention, there is provided an in-vehicle electronic apparatus adapted to detachably house a portable electronic apparatus having a first GPS antenna for receiving a GPS signal and a GPS receiver connectable to the first GPS antenna, the in-vehicle electronic apparatus including a second GPS antenna that is provided at a main body(of the vehicle) and which receives the GPS signal, and a connector that is directly connected to the second GPS antenna via a signal line. When the portable electronic apparatus is attached to the in-vehicle electronic apparatus via the connector, the GPS signal received by the second GPS antenna is output to the GPS receiver via the connector.

Accordingly, when the portable electronic apparatus is attached to the in-vehicle electronic apparatus, the GPS signal received by the second GPS antenna of the in-vehicle electronic apparatus is sent to the GPS receiver of the portable electronic apparatus. If the portable electronic apparatus is attached to the in-vehicle electronic apparatus and the reception sensitivity of the GPS signal by use of the first GPS antenna is degraded, the portable electronic apparatus is capable of using the GPS signal received by the second GPS antenna. As a result, it is possible to improve the accuracy of the location detection of a vehicle in which the in-vehicle electronic apparatus is mounted by use of the portable electronic apparatus, the in-vehicle electronic apparatus having the portable electronic apparatus therein.

In addition, the GPS signal received by the second GPS antenna of the in-vehicle electronic apparatus and the GPS signal received by the first GPS antenna of the portable electronic apparatus are received by a single GPS receiver, whereby the functionalities of a single GPS receiver can be commonly used by the in-vehicle electronic apparatus and the portable electronic apparatus and the production cost of the in-vehicle electronic apparatus can be reduced.

According to another aspect of the present invention, there is provided an in-vehicle electronic system having a portable electronic apparatus and an in-vehicle electronic apparatus to which the portable electronic apparatus can be detachably mounted, the in-vehicle electronic apparatus including an in-vehicle electronic apparatus side GPS antenna for receiving a GPS signal; and the portable electronic apparatus including: a portable electronic apparatus side GPS antenna for receiving the GPS signal; a GPS receiver into which the GPS signal received by the portable electronic apparatus side GPS antenna receiving the GPS signal or the GPS signal received by the in-vehicle electronic apparatus side GPS antenna is input; a detecting portion for detecting that the portable electronic apparatus is attached to the in-vehicle electronic apparatus; and a switching portion operable to change a signal to be input into the GPS receiver to one of the GPS signal received by the portable electronic apparatus side GPS antenna and the GPS signal received by the in-vehicle electronic apparatus side GPS antenna, on the basis of a detection result of the detecting portion.

Therefore, the detecting portion of the portable electronic apparatus detects the attachment to the in-vehicle electronic apparatus, and the switching portion changes a signal to be input into the GPS receiver to one of the GPS signal received by the portable electronic apparatus side GPS antenna and the GPS signal received by the in-vehicle electronic apparatus side GPS antenna, on the basis of a detection result, whereby it is possible for the portable electronic apparatus to utilize the GPS signal received by the second GPS antenna, when the portable electronic apparatus is attached to the in-vehicle electronic apparatus and the reception sensitivity of the GPS signal by use of the first GPS antenna is degraded. As a result, it is possible to improve the accuracy of the location detection of the vehicle in which the in-vehicle electronic apparatus is mounted, the in-vehicle electronic apparatus being detected by the portable electronic apparatus attached to the in-vehicle electronic apparatus.

In addition, the GPS signal received by the second GPS antenna of the in-vehicle electronic apparatus and the GPS signal received by the first GPS antenna of the portable electronic apparatus are received by a single GPS receiver, whereby the functionalities of a single GPS receiver can be commonly used by the in-vehicle electronic apparatus and the portable electronic apparatus and the production cost of the in-vehicle electronic apparatus can be reduced.

Exemplary embodiments of the present invention will be described in detail with reference to the following drawings, by way of example only, wherein:
FIG. 1A shows an exterior view of an in-vehicle system, and FIG. 1B shows a state where a portable apparatus is detached from an in-vehicle apparatus;
FIG. 2 shows a front face portion of the in-vehicle apparatus, from which the portable apparatus is removed;
FIG. 3 is a view showing a state of tilting the front face portion of the in-vehicle apparatus against the main body of the in-vehicle apparatus to expose a CD insertion/ejection slot;
FIG. 4 shows a state of mounting the in-vehicle system in a vehicle;
FIG. 5 shows a schematic configuration of the in-vehicle system;
FIG. 6 shows a configuration of the front face portion of the in-vehicle apparatus;
FIG. 7A through FIG. 7C show display examples of the portable apparatus attached to a main body;
FIG. 8A shows a front view, top view, bottom view, left-side view, and right-side view of the portable apparatus, and FIG. 8B is a back view of the portable apparatus; and
FIG. 9 is a flowchart showing a switching process of a switch 22, performed by a controller 20.

A description will now be given, with reference to the accompanying drawings, of exemplary embodiments of the present invention.

### (Embodiment)

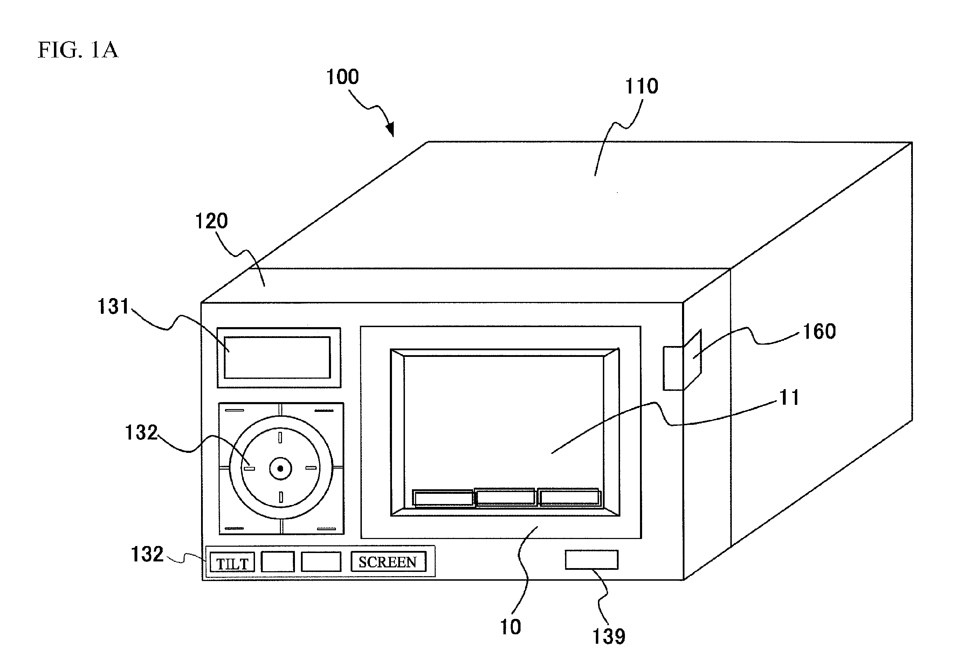

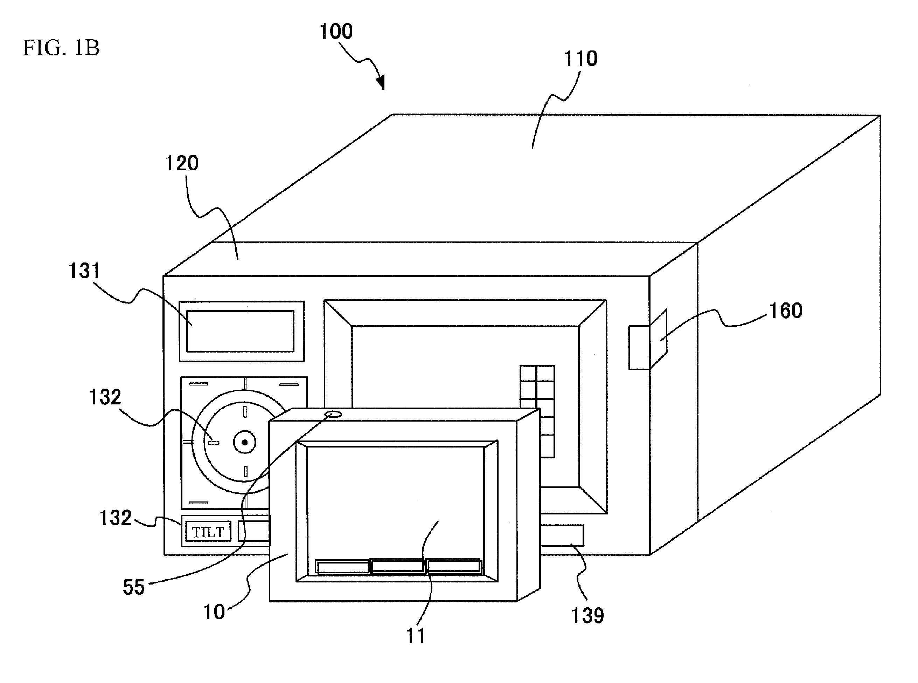

FIG. 1A and FIG. 1B show exterior views of an in-vehicle system 1. As shown in FIG. 1A and FIG. 1B, the in-vehicle system 1 is composed of: an in-vehicle apparatus 100 (in-vehicle electronic apparatus); and a portable apparatus 10 (portable electronic apparatus) with navigation capabilities. The portable apparatus 10 can be used after being attached at a front face portion 120 of the in-vehicle apparatus 100, as shown in FIG. 1A, and can be also used after being detached from the in-vehicle apparatus 100, as shown in FIG. 1B. For example, the in-vehicle system 1 may be a car navigation system, the in-vehicle apparatus 100 may be an in-vehicle sound apparatus equipped with a CD (Compact Dick) drive, a radio tuner, and the like, and the portable apparatus 10 may be a portable navigator having navigation capabilities.

The in-vehicle apparatus 100 is capable of playing radio broadcasting or playing music data recorded on a memory medium such as a CD or the like, and the in-vehicle apparatus 100 includes: an in-vehicle apparatus main body 110 having a CD player and a CD insertion/ejection slot; and the front face portion 120 having a display portion 131 and an operating portion (main operating portion) 132. The portable apparatus 10 has navigation capabilities of searching for a guiding path (route) to a destination and displaying the searched guiding path (route) over a map.

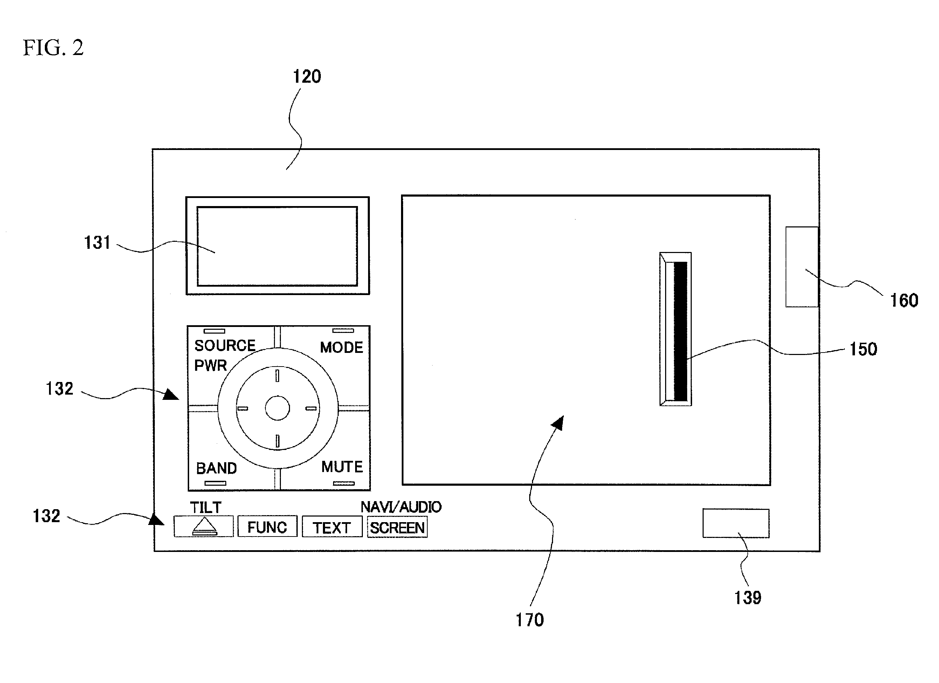

FIG. 2 shows the front face portion 120 of the in-vehicle apparatus 100, from which the portable apparatus 10 is removed. There is provided an attached/detached (housing) portion 170 in which a recess portion is defined for attaching the portable apparatus 10, at the front face portion 120 of the in-vehicle apparatus 100. The attached/detached portion 170 is provided with: a connector 150 for electrically coupling the in-vehicle apparatus 100 and the portable apparatus 10; and a lock mechanism (not shown) for securing the portable apparatus 10 to the front face portion 120. When a detach button 160 provided at the front face portion 120 is operated, a lock mechanism, not shown, is unlocked and the portable apparatus 10 is detachable from the in-vehicle apparatus 100.

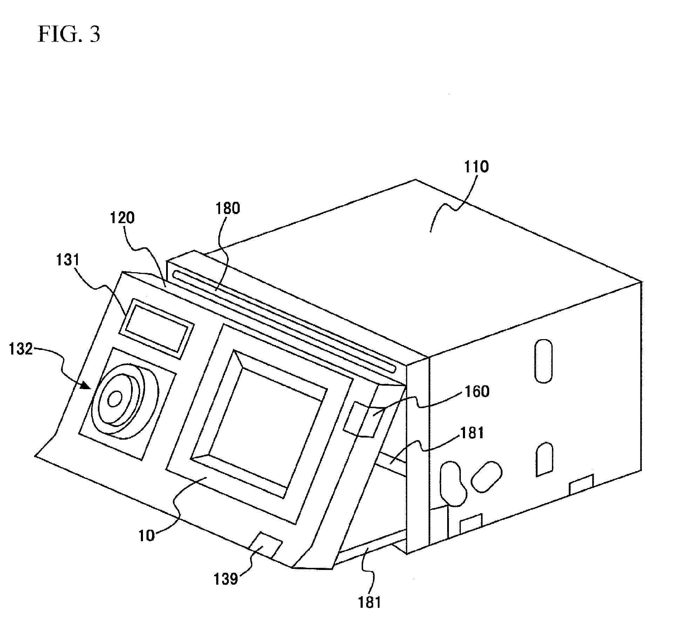

FIG. 3 shows a state of tilting the front face portion 120 against the in-vehicle apparatus main body 110 to expose a CD insertion/ejection slot 180.

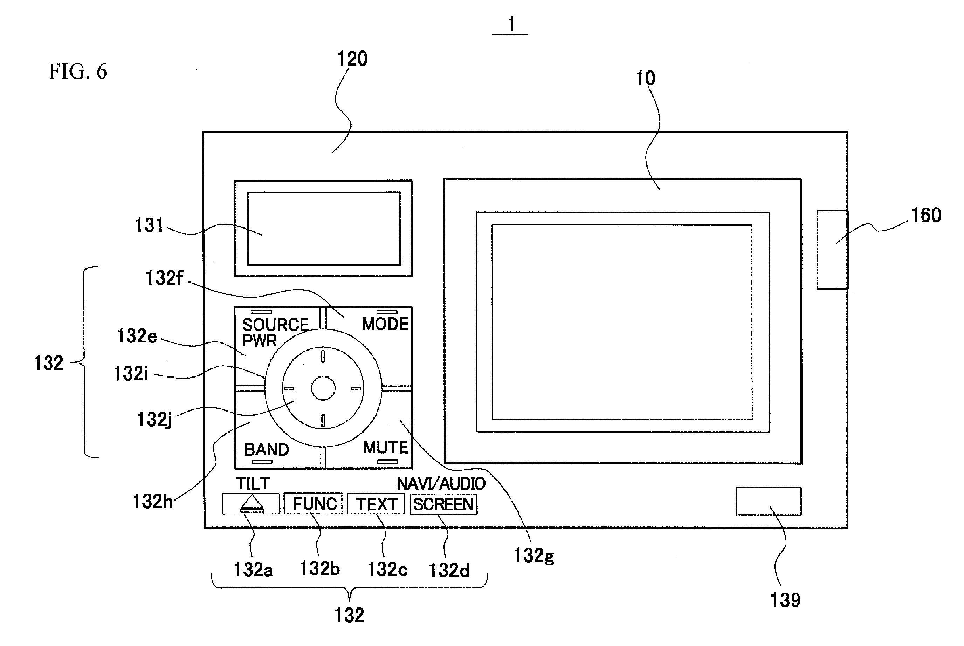

By driving a slider 181 shown in FIG. 3 with a drive mechanism, not shown, the front face portion 120 can be tilted against the in-vehicle apparatus main body 110. By tilting operation, the CD insertion/ejection slot 180 provided in the in-vehicle apparatus main body 110 is exposed, so a CD can be inserted or ejected. There is provided an operation button (a tilt/eject button 132a shown in FIG. 6), at the front face portion 120 of the in-vehicle apparatus 100, and a tilt angle can be set according to the operation of the button.

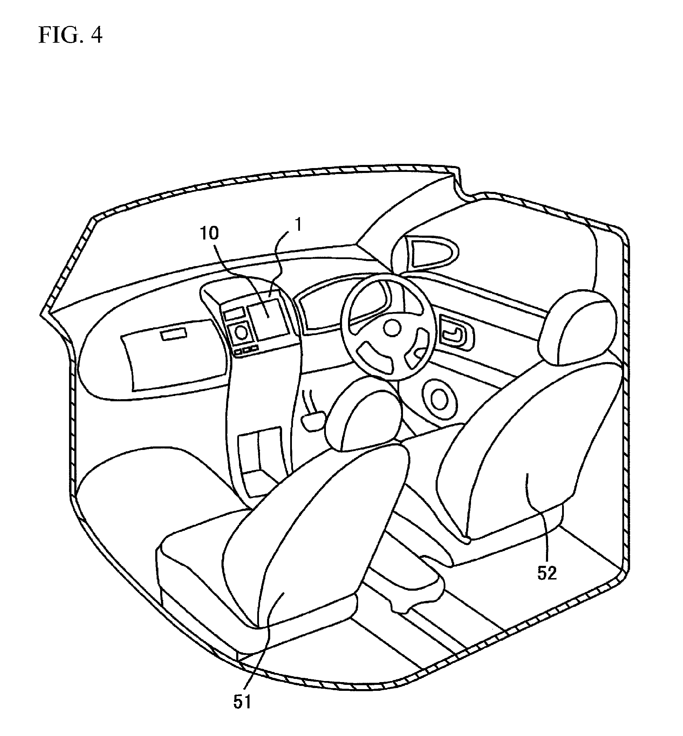

FIG. 4 illustrates an example of mounting the in-vehicle system 1 in a vehicle. The in-vehicle system 1 may be disposed in a dashboard portion substantially in the middle of a front-passenger's seat 51 and a driver's seat 52, as shown in FIG. 4, for example.

Here, although not shown, a GPS antenna 133 described later is disposed at a position where good reception of GPS signals from a satellite can be achieved, for example, on a dashboard or inside the front glass (windscreen) of a vehicle. The position of the GPS antenna 133 may be changed as necessary.

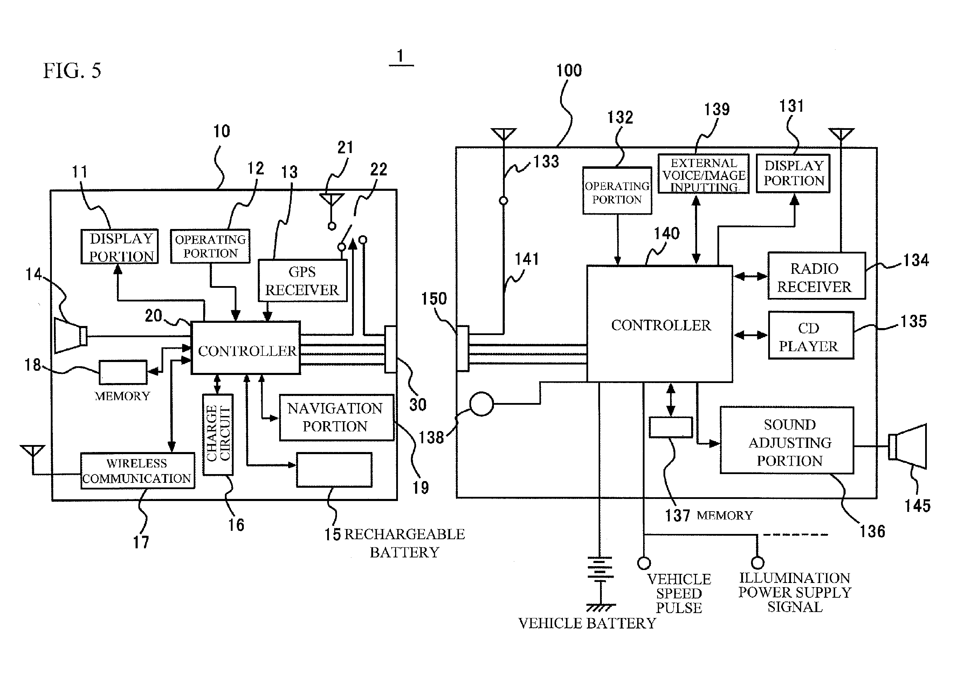

FIG. 5 is a block diagram showing a schematic configuration of the in-vehicle system 1.

The in-vehicle apparatus 100 and the portable apparatus 10 are electrically connected by connectors. The connector 150 is provided at the in-vehicle apparatus 100 side, and a connector 30 is provided at the portable apparatus 10. By connecting the connectors 150 and 30, various signals are sent and received between the in-vehicle apparatus 100 and the portable apparatus 10 to function as the in-vehicle system 1. The connectors 150 and 30 are respectively provided with power supply terminals for supplying power to the portable apparatus 10 from the battery of the vehicle. When the portable apparatus 10 is connected to the in-vehicle apparatus 100 and power is supplied to the in-vehicle apparatus 100, the power is also supplied to the portable apparatus 10 via the power supply terminals.

The in-vehicle apparatus 100 is provided with: the display portion 131; the operating portion 132; the GPS antenna 133 (second GPS antenna, in-vehicle side antenna); a radio receiver 134; a CD player 135; a sound adjusting portion 136; a memory 137; a microphone 138; an external voice/image inputting portion 139; a controller 140; a signal line 141; and the connector 150. The GPS antenna 133 is connected to the connector 150 through the signal line 141. The in-vehicle apparatus 100 is activated by supplying the power from the battery of the vehicle, when the engine key is positioned at Acc (Accessory) or IG (Ignition).

Hereinafter, the function of each part will be described in detail.

The display portion 131 is provided with a liquid crystal panel and a backlight, and displays a frequency of the received broadcasting, a track number of music being played, a music name being played, and the like, according to the 13-segment display.

The operating portion 132 is provided for selectively changing the operation mode of the in-vehicle apparatus 100, and for operating in various modes that have been changed. The operating portion 132 is provided with a group of buttons including: the tilt/eject button 132a; a function (represented as FUNC in the drawing)/AF button 132b; a TEXT button 132c; a SCREEN button 132d; a SOURCE/PWR button 132e; a MODE button 132f; a MUTE button 132g; a BAND change button 132h; a rotary button 132i; a cross key/enter key button 132j, as shown in FIG. 6.

Here, a description will be given of switching the display between the portable apparatus 10 and the in-vehicle apparatus 100.

Firstly, the in-vehicle apparatus 100 turns on when the SOURCE/POWER button 132e of the in-vehicle apparatus 100 is pushed. When the SOURCE/POWER button 132e is pushed for a short period of time while the portable apparatus 10 is on, the source is changed to the CD playing or radio broadcasting. At this time, the information on the selected source is displayed on the display portion 131 of the in-vehicle apparatus 100, and the navigation image is displayed on a display portion 11 of the portable apparatus 10, without relation to the source.

Next, when the SCREEN button 132d is pushed, the navigation image displayed on the display portion 11 of the portable apparatus 10 can be changed to an image corresponding to the source selected at the in-vehicle apparatus 100.

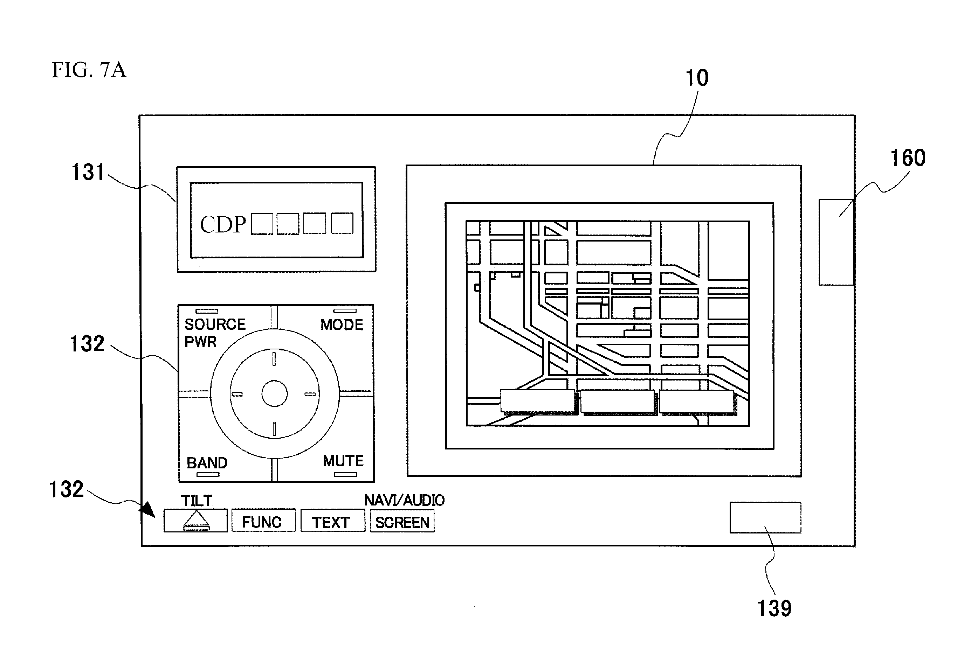

FIG. 7A shows a state where the portable apparatus 10 is attached to the in-vehicle apparatus 100 while the CD is being played and a navigation image is being displayed on the portable apparatus 10.

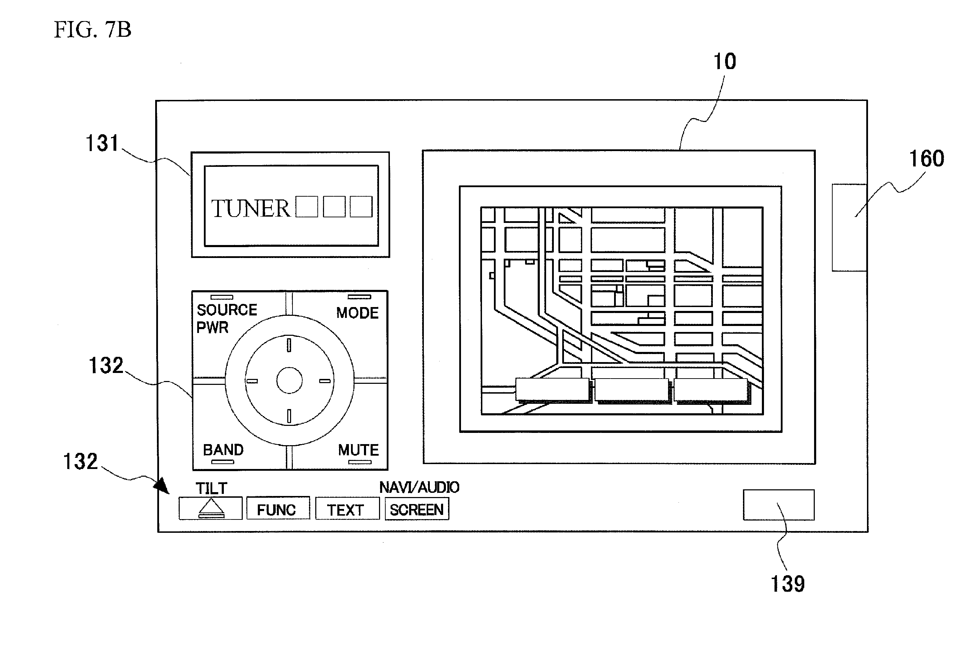

When the SOURCE/POWER button 132e is pushed in the state of FIG. 7A and the source is changed from the CD playing to the radio broadcasting, the information on the radio source is displayed on the display portion 131, as shown in FIG. 7B. Also, the navigation image remains being displayed on the display portion 11 of the portable apparatus 10.

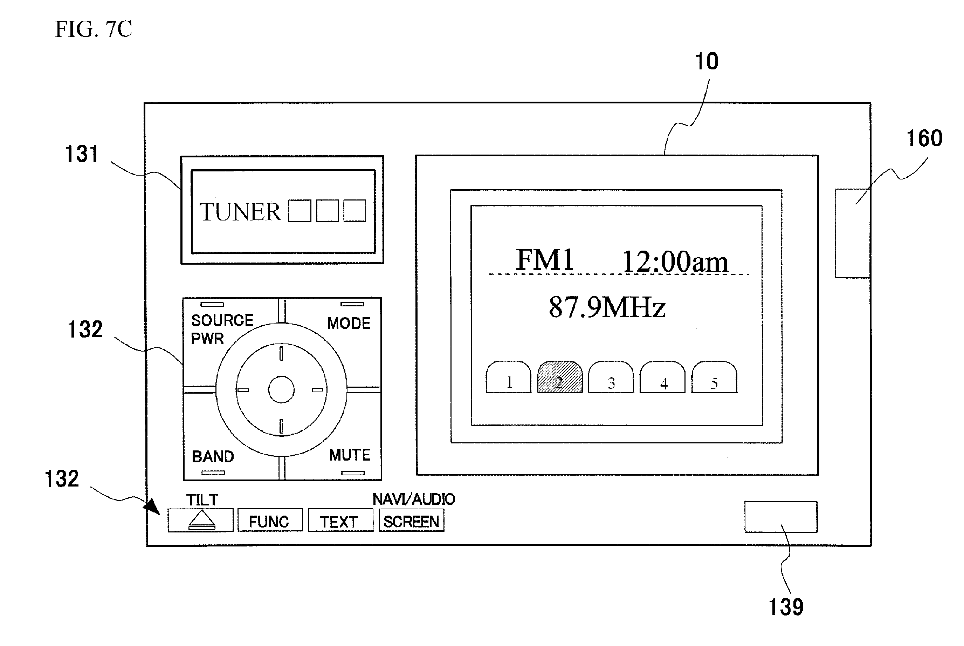

Then, when a user pushes the SCREEN button 132d, the image corresponding to the source being processed by the in-vehicle apparatus 100 is displayed on the display portion 11 of the portable apparatus 10, as shown in FIG. 7C (radio image is displayed in FIG. 7C). A touch panel, described later, is provided in the display portion 11 of the portable apparatus 10. A user is capable of operating the source currently being processed, by selecting the operation buttons displayed on the display portion 11.

In addition, when the SCREEN button 132d is pushed with the radio screen being displayed on the display portion 11, it is possible to return to the navigation image in FIG. 7B from the radio image in FIG. 7C. When the portable apparatus 10 is removed from the in-vehicle apparatus 100, the operation of the SCREEN button 132d is disabled.

Furthermore, when a USB (Universal Serial Bus) or the like is connected to the external voice/image inputting portion 139 with the portable apparatus 10 removed from the in-vehicle apparatus 100, it is possible to prevent the change to the USB source, even if the SOURCE/POWER button 132e is pushed.

Referring back to FIG. 5, the GPS antenna 133 receives GPS signals from a satellite. The GPS antenna 133 may be disposed on the dashboard or may be applied to the front glass, as described above. The GPS signal received by the GPS antenna 133 is output through the signal line 141, the connector 150, the connector 30, and a switch 22 of the portable apparatus 10, to a GPS receiver 13. The GPS signal received by the GPS receiver 13, described later, is used for determining the location of a navigation portion 19 itself or the vehicle in which the in-vehicle apparatus 100 having the portable apparatus therein 10 is mounted, by means of the navigation portion 19.

Herein, the GPS signal received by the GPS antenna 133 may be output to the switch 22 through the controller 140, or may be output to the GPS receiver 13 through a controller 20 by use of the GPS antenna 133. In this manner, the configuration of the portable apparatus 10 and that of the in-vehicle apparatus 100 may be changed as necessary. If the GPS antenna 133 is directly connected to the connector 150 through the signal line 141, there is an advantage in that noise hardly enters the GPS signal, as compared to a case where the GPS antenna 133 is connected to the connector 150 through the controller 140.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The CD player 135 reproduces the data stored in the CD, and outputs the reproduced signal to the controller 140.

Herein, the demodulated signal output from the radio receiver 134 or the reproduced signal fed from the CD player 135 may be output to the sound adjusting portion 136, described later, without passing through the controller 140.

The sound adjusting portion 136 implements signal processing such as volume control or tone control on an audio signal received or demodulated by the radio receiver 134 or the audio signal reproduced by the CD player 135, and then outputs the processed signal to a speaker 145.

The memory 137 may be composed of a RAM (Random Access Memory) from which data is readable and into which data is writable, and temporarily stores information necessary for control.

The microphone 138 is provided for hands-free communication, and takes in user's voices in the vehicle.

The external voice/image inputting portion 139 is provided with a connection terminal with an external device such as a USB memory, portable audio device, or the like so that an audio signal or data from the external device may be input. The external voice/image inputting portion 139 then sends the signal or data to the controller 140, and outputs the audio signal, data, or the like to the external device connected.

The controller 140 controls the radio receiver 134, the CD player 135, and the sound adjusting portion 136, according to the operation by means of the operating portion 132. Also, the controller 140 outputs various signals through the connector 150 to the portable apparatus 10, and controls the in-vehicle apparatus 100 on the basis of the various signals input from the portable apparatus 10. For example, the controller 140 outputs an audio signal input through the microphone 138 to the portable apparatus 10 by way of the connector 150.

Here, the audio signal input through the microphone 138 may be output to the portable apparatus 10 by way of the connector 150, without passing through the controller 140.

In addition, the voice on communication over a mobile phone connected to the portable apparatus 10 is input through the connector 150 into the controller 140, and is then output through the sound adjusting portion 136 to the speaker 145. Furthermore, the controller 140 acquires an operation signal corresponding to a menu image of various modes displayed on the display portion 11 of the portable apparatus 10, from the controller 20 of the portable apparatus 10, and then controls the radio receiver 134 and the CD player 135.

Also, the power is supplied to the controller 140 from the battery mounted in the vehicle. When the portable apparatus 10 is connected, the controller 140 outputs the power supplied from the battery to the portable apparatus 10. Here, a vehicle speed pulse and an illumination power supply signal are input into the controller 140 from a vehicle. The controller 140 transfers such input vehicle speed pulse to the controller 20 of the portable apparatus 10. Meanwhile, the vehicle speed pulse may be configured not to be input into the in-vehicle apparatus 100.

Next, a description will be given of the portable apparatus 10. The portable apparatus 10 is provided with: the display portion 11; an operating portion 12; the GPS receiver 13; a speaker 14; a rechargeable battery 15; a charge circuit 16; a wireless communication transmitter/receiver 17; a memory 18; the navigation portion 19; the controller 20 (detecting portion, switching portion); a GPS antenna 21 (first GPS antenna, portable electronic apparatus side GPS antenna); the switch 22 (switching portion); and the connector 30.

Hereinafter, functions of the components will be described in detail.

The display portion 11 is provided with a liquid crystal panel and a backlight, and is capable of displaying map information generated by the navigation portion 19 and guiding path (route) information to a destination, the received broadcasting frequency transferred from the in-vehicle apparatus 100, a music track number played, music name played, and the like. Here, the display portions 11 and 131 may employ a flat panel display other than a liquid crystal panel. Examples are organic light emitting display, plasma display panel, cold-cathode flat panel display, or the like.

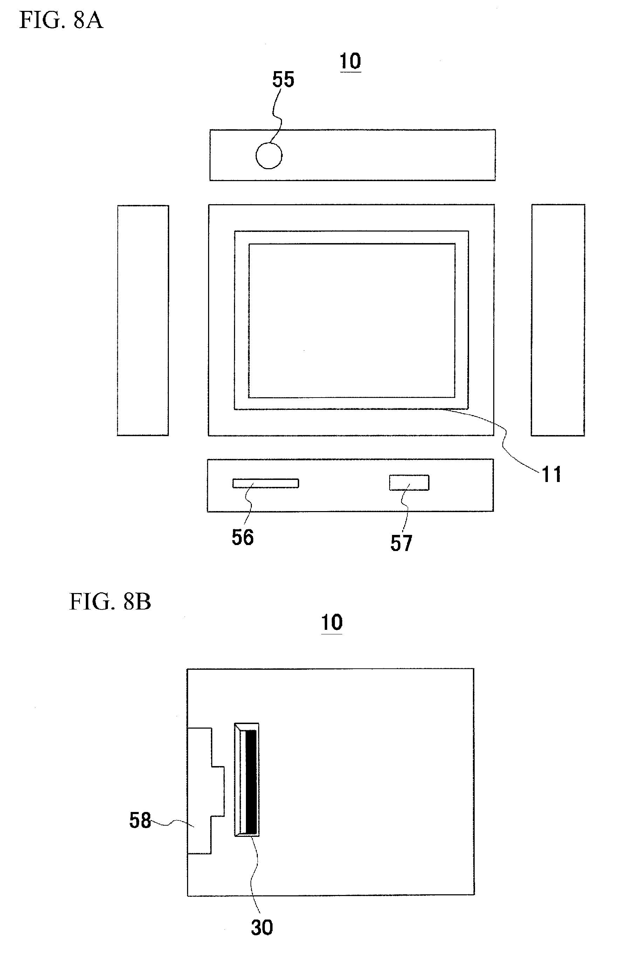

The operating portion 12 includes a touch panel and a power button 55 (see FIG. 8A) for powering on and off the portable apparatus 10. The touch panel may be, for example, disposed over the display screen. When the touch panel is touched by a finger or a dedicated pen, the touched position is detected to determine whether or not there is an input operation. The power button 55 will be described later.

The GPS antenna 21 receives the GPS signal from a satellite. Also, the GPS antenna 21 is disposed at the rear face side of the portable apparatus 10. The GPS receiver 13 receives the GPS signal from the GPS antenna 21 or the GPS antenna 133, demodulates the signal, and outputs the resulting demodulated signal to the navigation portion 19. Meanwhile, the in-vehicle apparatus 100 is also provided with the GPS antenna 133. However, when the portable apparatus 10 is attached to the in-vehicle apparatus 100, the location of the vehicle is specified by use of the GPS signal (and the vehicle speed pulse) received by the GPS antenna 133. When the portable apparatus 10 is used alone as a single unit, the location thereof is specified by use of the GPS signal received by the GPS antenna 21.

The speaker 14 is provided for outputting the audio information of the navigation portion 19, and outputs the audio information only when the portable apparatus 10 is detached from the in-vehicle apparatus 100, namely, used alone separately as a single unit.

The rechargeable battery 15 supplies power to each portion of the portable apparatus 10. When the portable apparatus 10 is attached to the in-vehicle apparatus 100, the power is supplied through the power supply terminals of the connector 30 from the battery of the vehicle and the rechargeable battery 15 is charged by the charge circuit 16. Also, the charge circuit 16 can be supplied with power from the connection terminal through a USB slot 57 (see FIG. 8A), and the rechargeable battery 15 can be charged in this way.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation portion 19 includes a map information storing portion that acquires map information used for navigation from an SD card or a USB memory card, described later, and stores therein, determines current location information with the demodulated GPS signal from the GPS receiver 13, and creates a map image for navigation. The created map image may be displayed on the display portion 11. In addition, when the in-vehicle apparatus 100 and the portable apparatus 10 are connected, the vehicle speed pulse is acquired from the vehicle so that the accuracy of the location detection of the vehicle can be improved.

Also, the map information may be retained in the portable apparatus 10.

The controller 20 controls each part of the portable apparatus 10. Also, the controller 20 outputs various signals to the in-vehicle apparatus 100 through the connector 30, and controls the portable apparatus 10 based on the various signals input from the in-vehicle apparatus 100.

Also, the controller 20 detects a connection state between the connector 30 and the connector 150 (that is, the connection state of the portable apparatus 10 and the in-vehicle apparatus 100). Specifically, the controller 20 sends a connection signal to the controller 140 on a regular basis or at an arbitrary timing. When the controller 20 receives a response from the controller 140, it is determined that the connector 30 is in connection with the connector 150.

In addition, the connector 30 may be provided with a switch, not shown, for detecting a connection with the connector 150. The controller 20 may detect the connection state of the connector 30 and the connector 150, by detecting the condition of the switch. The configuration for detecting the connection state between the connector 30 and the connector 150 may be changed as necessary.

Furthermore, instead of the detection of the connection state between the connector 30 and the connector 150, the receiving state of the GPS signal may be detected on a regular basis or at an arbitrary timing by use of the GPS antenna 21, so that the attachment state between the portable apparatus 10 and the in-vehicle apparatus 100 may be detected.

When the connection state between the connector 30 and the connector 150 is changed to connection from disconnection, the controller 20 selectively changes the switch 22 from the GPS antenna 21 to the connector 30. By doing this, the GPS receiver 13 receives the GPS signal from the GPS antenna 133. Meanwhile, when the connection state between the connector 30 and the connector 150 is changed to disconnection from connection, the controller 20 selectively changes the switch 22 from the connector 30 to the GPS antenna 21. By doing this, the GPS receiver 13 receives the GPS signal from the GPS antenna 21.

In this manner, the controller 20 selectively changes the GPS antenna to receive the GPS signal.
This is because the portable apparatus 10 is attached to the in-vehicle apparatus 100 to be embedded therein as shown in FIG. 1B, and the portable apparatus 10 is disposed in a vehicle as shown in FIG. 4, whereby the GPS signal received by the GPS antenna 21 stops being received. In this case, since the GPS signal stops being received, the accuracy of the location detection of the portable apparatus 10 by means of the portable apparatus 10 is degraded. In order to avoid this, when the connector 30 is in connection with the connector 150, the controller 20 changes the GPS antenna that receives the GPS signal from the GPS antenna 21 to the GPS antenna 133 disposed outside the vehicle.

Also, the controller 20 can acquire an audio signal input from the microphone 138 of the in-vehicle apparatus 100 from the controller 140 of the in-vehicle apparatus 100, and controls the navigation portion 19 according to the audio signal. That is to say, it is possible to operate the navigation portion 19 in a hands-free manner. Voice over communication on a mobile telephone coupled to the wireless communication transmitter/receiver 17 is output to the in-vehicle apparatus side through the connector 30 and output from the speaker 145 of the in-vehicle apparatus 100. Also, the operation signal on the menu screen or content screen displayed on the display portion 11 is output to the controller 140 of the in-vehicle apparatus 100 through the connector 30. The controller 140 controls the radio receiver 134 or the CD player 135 according to the operation signal transmitted from the controller 20 of the portable apparatus 10.

FIG. 8A shows a front view, top view, bottom view, left-side view, and right-side view of the portable apparatus 10. FIG. 8B is a back view of the portable apparatus 10.

The top face of the portable apparatus 10 is provided with the power button 55 for turning on or off the power of the portable apparatus. The bottom face of the portable apparatus 10 is provided with: an SD (Secure Digital) memory card slot 56; and the USB slot 57. By inserting the SD card or the USB memory storing the map information into the slots, the controller 20 reads the map information from the SD card or the USB memory, and outputs the map information to the navigation portion 19.

The portable apparatus 10 is powered on or off by the control of the in-vehicle apparatus 100, when the portable apparatus is attached to the in-vehicle apparatus 100. In addition, the power of the portable apparatus 10 is operated by on and off operations of the power button 55, when the portable apparatus 10 is removed from the in-vehicle apparatus 100 and used as a single unit.

At a backside of the portable apparatus 10, there are provided: the connector 30 electrically connectable with the in-vehicle apparatus 100; and an engagement portion 58 to be engaged with a lock mechanism (not shown) provided at the in-vehicle apparatus 100 side.

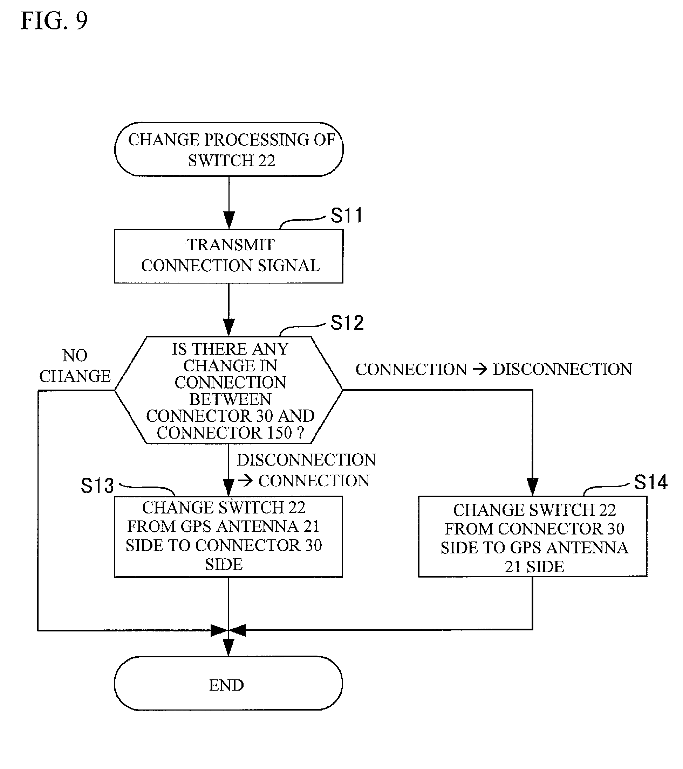

FIG. 9 is a flowchart showing a switch operation of the switch 22 performed by the controller 20 of the portable apparatus 10. This processing may be implemented on a regular basis or at an arbitrary timing.

Firstly, the above-described connection signal is transmitted (step S11), it is determined whether or not there is a change in the connection state between the connector 30 and the connector 150, according to the presence of the response from the controller 140 (step S12). If there is no change in the connection state, this processing ends. If the connection state between the connector 30 and the connector 150 changes from the disconnection state at a previous time to the connection state this time (when the portable apparatus 10 is attached to the in-vehicle apparatus 100), the switch 22 is changed to the connector 30 side from the GPS antenna 21 side (steps S13) and this processing ends. Meanwhile, if the connection state between the connector 30 and the connector 150 changes from the connection state at a previous time to the disconnection state this time (when the portable apparatus 10 is detached from the in-vehicle apparatus 100), the switch 22 is changed to the GPS antenna 21 side from the connector 30 side (steps S14) and this processing ends.

As described heretofore, in accordance with the present exemplary embodiment, when the connector 150 of the in-vehicle apparatus 100 is connected to the connector 30 of the portable apparatus 10, the GPS signal received by the GPS antenna 133 of the in-vehicle apparatus 100 is directly transmitted to the GPS receiver 13 of the portable apparatus 10 through the signal line 141, the connector 30, and the connector 150. Hence, when the portable apparatus 10 is attached to the in-vehicle apparatus 100 and the receiving sensitivity of the GPS signal by use of the GPS antenna 21 is degraded, the portable apparatus 10 is capable of utilizing the GPS signal received by the GPS antenna 133. This results in the improvement of accuracy of location detection of the vehicle equipped with the in-vehicle apparatus 100 to be detected by the portable apparatus 10 attached to the in-vehicle apparatus 100.

In addition, since the GPS antenna 133 is directly connected to the connector 150 via the signal line 141, there is an advantage in that noise hardly enters the GPS signal, as compared to a case where the GPS antenna 133 is connected to the connector 150 via a microcomputer, controller, or the like.

Furthermore, the GPS signal received by the GPS antenna 133 of the in-vehicle apparatus 100 and the GPS signal received by the GPS antenna 21 of the portable apparatus 10 are received by a single GPS receiver 13 and then demodulated, whereby the in-vehicle apparatus 100 and the portable apparatus 10 are capable of commonly using the functionalities of a single GPS receiver 13, and the production cost of the in-vehicle apparatus 100 can be reduced.

Also, in the above-described exemplary embodiment, for example, the portable apparatus 10 may be composed of a mobile telephone with the navigation functionality or a personal digital assistant (PDA). Furthermore, instead of the CD insertion/ejection slot 180 and the CD player 135, there may be provided an insertion/ejection slot and a player thereof for another memory media such as MD (Mini Disc), DVD (Digital Versatile Disk), memory card, or the like, and there may also provided insertion/ejection slots and players for multiple types of memory media. GPS as used in this application refers to any satellite positioning system.

Although a few specific exemplary embodiments employed in the present invention have been shown and described, it would be appreciated by those skilled in the art that changes may be made in these exemplary embodiments without departing from the principles and spirit of the invention, the scope of which is defined in the claims and their equivalents.

## Claims

1. An in-vehicle electronic apparatus configured to detachably hold a portable electronic apparatus having a first GPS antenna for receiving a GPS signal and a GPS receiver connectable to the first GPS antenna,
the in-vehicle electronic apparatus comprising:
a second GPS antenna that is provided at a main body and which is operable to receive the GPS signal; and
a connector that is directly connected to the second GPS antenna via a signal line,
wherein when the portable electronic apparatus is attached to the in-vehicle electronic apparatus via the connector, the GPS signal received by the second GPS antenna is output to the GPS receiver via the connector.

2. An in-vehicle electronic system having a portable electronic apparatus and an in-vehicle electronic apparatus configured to detachably hold the portable electronic apparatus,
wherein:
the in-vehicle electronic apparatus comprises an in-vehicle electronic apparatus side GPS antenna for receiving a GPS signal; and
the portable electronic apparatus comprises:
a portable electronic apparatus side GPS antenna for receiving the GPS signal;
a GPS receiver for receiving the GPS signal received by the portable electronic apparatus side GPS antenna or the GPS signal received by the in-vehicle electronic apparatus side GPS antenna;
a detecting portion operable to detect whether the portable electronic apparatus is attached to the in-vehicle electronic apparatus; and
a switching portion operable to change a signal to be input into the GPS receiver to one of the GPS signal received by the portable electronic apparatus side GPS antenna and the GPS signal received by the in-vehicle electronic apparatus side GPS antenna, on the basis of a detection result of the detecting portion.

3. An in-vehicle electronic system according to claim 2, wherein the switching portion is operable to input the GPS signal from the portable electronic apparatus side GPS antenna to the GPS receiver when the detection result is that the portable electronic apparatus is not connected to the in-vehicle electronic apparatus, and is operable to input the GPS signal from the in-vehicle electronic apparatus side GPS antenna when the detection result is that the portable electronic apparatus is connected to the in-vehicle electronic apparatus.

4. A portable electronic apparatus which is detachably mountable to an in-vehicle electronic apparatus, the portable electronic apparatus comprising:
a detecting portion operable to detect whether the portable electronic apparatus is attached to the in-vehicle electronic apparatus;
a portable electronic apparatus side GPS antenna for receiving a GPS signal;
a GPS receiver for receiving the GPS signal received by the portable electronic apparatus side GPS antenna or the GPS signal received by an in-vehicle electronic apparatus side GPS antenna associated with the in-vehicle electronic apparatus, when the portable electronic apparatus is attached to the in-vehicle electronic apparatus; and
a switching portion operable to change a signal to be input into the GPS receiver to one of the GPS signal received by the portable electronic apparatus side GPS antenna and the GPS signal received by the in-vehicle electronic apparatus side GPS antenna, on the basis of a detection result of the detecting portion.

5. A portable electronic apparatus according to claim 4, wherein the switching portion is operable to input the GPS signal from the portable electronic apparatus side GPS antenna to the GPS receiver when the detection result is that the portable electronic apparatus is not connected to the in-vehicle electronic apparatus, and is operable to input the GPS signal from the in-vehicle electronic apparatus side GPS antenna when the detection result is that the portable electronic apparatus is connected to the in-vehicle electronic apparatus.
